(19) Europäisches Patentamt / European Patent Office / Office européen des brevets

(11) **EP 4 650 863 A1**

(12) **EUROPEAN PATENT APPLICATION**

(43) Date of publication:
**19.11.2025 Bulletin 2025/47**

(21) Application number: **25177092.1**

(22) Date of filing: **16.05.2025**

(51) International Patent Classification (IPC):
*G02F 1/21* (2006.01)    *G02B 6/125* (2006.01)
*G02F 1/225* (2006.01)    *G02B 6/293* (2006.01)
*G02B 6/12* (2006.01)

(52) Cooperative Patent Classification (CPC):
**G02F 1/212; G02B 6/12007; G02B 6/125;
G02B 6/29353; G02B 6/29355; G02F 1/225;**
G02B 6/2935; G02B 6/29398; G02B 2006/12159

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **16.05.2024 US 202463648240 P**

(71) Applicant: **Ranovus Inc.
Kanata, Ontario K2K 2X1 (CA)**

(72) Inventors:
• **MURRAY, Kyle
DE-90762 Fuerth (DE)**
• **HICKEY, Ryan Murray
Stittsville, ON K2S 1Z5 (CA)**

(74) Representative: **ABG Intellectual Property Law,
S.L.
Avenida de Burgos, 16D
Edificio Euromor
28036 Madrid (ES)**

(54) **FABRICATION TOLERANT AND TEMPERATURE TOLERANT MACH ZEHNDER INTERFEROMETERS**

(57)    A Mach-Zehnder Interferometer (MZI) includes a first arm having one or more first delay sections and respective first undercuts beneath the first delay sections, the first delay section(s) having a total first length and a first width. A second arm includes one or more second delay section(s) and respective second undercuts beneath the second delay section(s), the second delay section(s) having a total second length and a second width. The total first length is longer than the total second length, and the first width is less than the second width. The first width and the second width are selected to be less than a threshold width. For widths above the threshold width, variations in index-to-width tolerance are anticorrelated with respective variations in index-to-thickness tolerance and index-to-temperature tolerance. For widths below the threshold width, variations in index-to-width tolerance are correlated with respective variations in index-to-thickness tolerance and index-to-temperature tolerance.

FIG. 7

EP 4 650 863 A1

## Description

## FIELD

The present invention is directed to interferometers for optical communication systems, and in particular to fabrication tolerant and temperature tolerant Mach Zehnder interferometers.

## BACKGROUND

Mach Zehnder interferometers may be used as multiplexers or demultiplexers in optical communication systems. The simplest design of a Mach Zehnder interferometer, which may be used as a multiplexer, has a single delay line implemented with a waveguide of a fixed geometry. The sensitivity to the various parameters is then determined by this waveguide geometry. The downside of this approach is that optimizing the waveguide geometry to minimize the sensitivity to one parameter (e.g., waveguide thickness or temperature) will make the sensitivity to another parameter (e.g., waveguide width) worse such that simultaneous insensitivity to all three parameters is not possible. This may lead to large deviations between intended and fabricated properties of a Mach Zehnder interferometer.

A more complicated MZI design, using two delay lines of different widths, offers more design freedom by allowing the joint optimization of the two delay line geometries. For typically used waveguide widths (e.g., at or above 800 nm) this approach also suffers from the above described limitation where simultaneous insensitivity to width, thickness and temperature is challenging.

## BRIEF DESCRIPTIONS OF THE DRAWINGS

For a better understanding of the various implementations described herein and to show more clearly how they may be carried into effect, reference will now be made, by way of example only, in which:

FIG. 1A schematically depicts a simple MZI multiplexer or demultiplexer, that includes an upper arm with a delay line, $\Delta L1$, which is longer than a corresponding line, $\Delta L2$, of a lower arm, introducing a wavelength-dependent phase difference between the arms to achieve a desired free spectral range (FSR), according to the prior art.

FIG. 1B schematically depicts another simple MZI multiplexer or demultiplexer, that includes an upper arm with a delay line, $\Delta L1$, which is longer than a corresponding delay line, $\Delta L2$, of a lower arm, with the delay lines of the upper and lower arms being of different widths, according to the prior art.

FIG. 2 depicts graphs showing tolerance of thickness of delay lines of an MZI, similar to FIG. 1A and/or FIG. 1B, as a function of delay line widths, including an upper graph showing a change in effective index of refraction with respect to a change in a respective thickness (dn/dh), as a function of delay line width, and a lower graph showing a change in wavelength with respect to a change in a respective thickness (dlambda/dh), as a function of delay line width.

FIG. 3 depicts graphs showing tolerance of width of delay lines of an MZI multiplexer, similar to FIG. 1A and/or FIG. 1B, as a function of delay line widths, including an upper graph showing a change in effective index of refraction with respect to a change in a respective width (dn/dw), as a function of delay line width, and a lower graph showing a change in wavelength with respect to a change in a respective width (dlambda/dw), as a function of delay line width.

FIG. 4 depicts graphs showing tolerance of temperature of delay lines of an MZI multiplexer, similar to FIG. 1A and/or FIG. 1B, as a function of delay line widths, including an upper graph showing a change in effective index of refraction with respect to a change in a respective temperature (dn/dT), as a function of delay line width, and a lower graph showing a change in wavelength with respect to a change in a respective temperature (dlambda/dT), as a function of delay line width.

FIG. 5 depicts two graphs showing the change in effective index by change in width (dn/dw) and thickness (dn/dh) as a function of delay line width, with values for delay lines L1 and L2 having widths of 800 nm and 1000 nm, respectively.

FIG. 6 depicts the graphs from FIG. 5 but with delay lines L1 and L2 having widths of 300 nm and 600 nm, respectively, demonstrating similar trends in dn/dh and dn/dw.

FIG. 7 depicts an MZI with reduced sensitivity comprising two power couplers connected by two arms with delay lines of different widths and lengths; the waveguides of the delay lines have varying widths to achieve tolerance sensitivity, according to present examples.

FIG. 8 depicts a cross-section of one of the delay lines of the MZI in FIG. 7, showing an undercut in the substrate material, according to present examples.

FIG. 9 generally depicts an effect of the undercut on a dn/dT curve of the MZI of FIG. 7, showing how using air or a material with a negative thermo-optic coefficient to fill the undercut region affects the thermo-optic behavior of the waveguide, according to present examples.

FIG. 10 depicts a delay section with periodically segmented waveguides (subwavelength grating), allowing additional flexibility in controlling waveguide parameters and achieving effects similar to those in FIG. 9, according to present examples.

FIG. 11 depicts transmission of two different colors of light at two outputs of a prototype of the MZI of FIG. 7, as a function of wavelength to compare "As Fabricated" results to "As Designed" predictions, according to present examples.

FIG. 12 depicts two MZIs, similar to that of FIG. 7, coupled together in two stages to form a multiplexer (or demultiplexer), according to present examples.

FIG. 13 depicts three MZIs, similar to that of FIG. 7, coupled together in two stages to form a multiplexer (or demultiplexer), according to present examples.

## DETAILED DESCRIPTION

Mach Zehnder Interferometers (MZIs) fabricated on photonic integrated circuits (PICs) are commonly used building blocks used to build larger filters. The performance of these filters (e.g., crosstalk, insertion loss, center wavelength, bandwidth) are sensitive to variations in various physical parameters such that variations in these parameters may lead to a degradation in filter performance. Such parameters may include the width and thickness of the waveguides as well as the environmental temperature. In a typical silicon-on-insulator (SOI) system, the control over the effective index and mode size of standard waveguide structures of an MZI is limited. However, the present specification provides an MZI that is simultaneously low loss and exhibits low sensitivity to variations in all of the above stated parameters. In particular, the present specification provides fabrication tolerant and temperature tolerant MZIs.

In particular, an MZI is provided herein with two arms with respective delay lines of different widths, that are selected such that index of refraction tolerances and wavelength tolerances, with respect to thickness, width and temperature, are correlated (e.g., when thickness, width and temperature are increased or decreased, respective tolerances of index of refraction and wavelength also respectively increase or decrease). The widths may be selected from graphs and/or data that characterize tolerances index of refraction and wavelength with respect to thickness, width and temperature, as a function of delay line width. Furthermore, loss may be controlled by using an undercut under the respective delay lines.

In another example, an MZI is provided in which delay lines are periodically segmented to enable smaller effective waveguides of such delay lines; undercuts may be optional in these examples, though undercuts may reduce loss.

Either of these approaches offers additional parameters for design control. For example with respect to the undercut, a thickness of a substrate may allow for the removal of a high index substrate in the delay line regions to form the undercut. Replacing the substrate in these regions with a suitable material (e.g., in an undercut) may enable a mode of a waveguide of a delay line to expand without loss and/or with greatly reduced loss. Such a suitable material may comprise air, a negative thermal-optic material, and/or an index-matching material (e.g., index matched to a cladding material), and/or any material of a sufficiently low index that obviates leakage and/or a lossy mode.

Furthermore, herein the terms delay line and delay section are used interchangeably.

The present specification provides a first example Mach-Zender Interferometer (MZI) comprising: a first arm comprising: one or more first delay sections; and respective first undercuts under the one or more first delay sections, the one or more first delay sections having a total first length and a first width; a second arm comprising: one or more second delay sections; and respective second undercuts under the one or more second delay sections, the one or more second delay sections having a total second length and a second width, wherein the total first length is longer than the total second length, and the first width is less than the second width, wherein the first width and the second width are selected to be less than a threshold width, and wherein for widths above the threshold width, variations in index-to-width tolerance are anticorrelated with respective variations in index-to-thickness tolerance and index-to-temperature tolerance, and for respective widths below the threshold width the variations in the index-to-width tolerance are correlated with the respective variations in the index-to-thickness tolerance and the index-to-temperature tolerance.

The first example MZI may further comprise at least one input and at least two outputs having a third width that is greater than the second width.

At the first example MZI, the first arm and the second arm may comprise silicon.

At the first example MZI, the first arm and the second arm may comprise silicon nitride.

At the first example MZI, the one or more first delay sections may comprise one or more first periodically segmented waveguides of a first periodicity; and the one or more second delay sections may comprise one or more second periodically segmented waveguides of a second periodicity, different from the first periodicity.

The first example MZI may further comprise: a cladding; and a material in the respective first undercuts and the respective second undercuts, the material comprising one or more of: air; a negative thermo-optic material; and an index-matching material that is index matched to the cladding.

The first example MZI may further comprise: a cladding; and a material in the respective first undercuts and the respective second undercuts, the material having an index of refraction that is less than or about equal to an index of refraction of the cladding.

At the first example MZI, the respective first undercuts and the respective second undercuts are formed with a depth greater than a wavelength of light that the one or more first delay sections and the one or more second delay sections are configured to guide.

At the first example MZI, the respective first undercuts and the respective second undercuts may be formed to be wider than a mode size of light that the one or more first delay sections and the one or more second delay sections are configured to guide.

At the first example MZI, the first width and the second width may be formed such that the respective variations in the index-to-width tolerance, the index-to-thickness tolerance and the index-to-temperature tolerance are all in a same direction.

The first example MZI may further comprise a cladding that comprises one or more of glass and $SiO_2$.

At the first example MZI, the first arm and the second arm may comprise optically coupled power couplers arranged as 2x2 directional couplers.

The present specification provides a second example Mach-Zender Interferometer (MZI) comprising: a first arm comprising: one or more first delay sections comprising one or more first periodically segmented waveguides of a first periodicity; and a second arm comprising: one or more second delay sections comprising one or more second periodically segmented waveguides of a second periodicity, different from the first periodicity.

At the second example MZI: the first arm may further comprise respective first undercuts under the one or more first delay sections; and the second arm may further comprise respective second undercuts under the one or more second delay sections.

At the second example MZI: the one or more first delay sections may have a total first length and a first width; the one or more second delay sections may have a total second length and a second width, wherein the total first length is longer than the total second length, and the first width is less than the second width, wherein the first width and the second width are selected to be less than a threshold width, and wherein for widths above the threshold width, variations in index-to-width tolerance are anticorrelated with respective variations in index-to-thickness tolerance and index-to-temperature tolerance, and for respective widths below the threshold width the variations in the index-to-width tolerance are correlated with the respective variations in index-to-thickness tolerance and the index-to-temperature tolerance. The second example MZI may further comprise at least one input and at least two outputs having a third width that is greater than the second width.

At the second example MZI, the first arm and the second arm may comprise silicon.

At the second example MZI, the first arm and the second arm may comprise silicon nitride.

The second example MZI may further comprise a cladding that comprises one or more of glass and $SiO_2$.

At the second example MZI, the first arm and the second arm may comprise optically coupled power couplers arranged as 2x2 directional couplers.

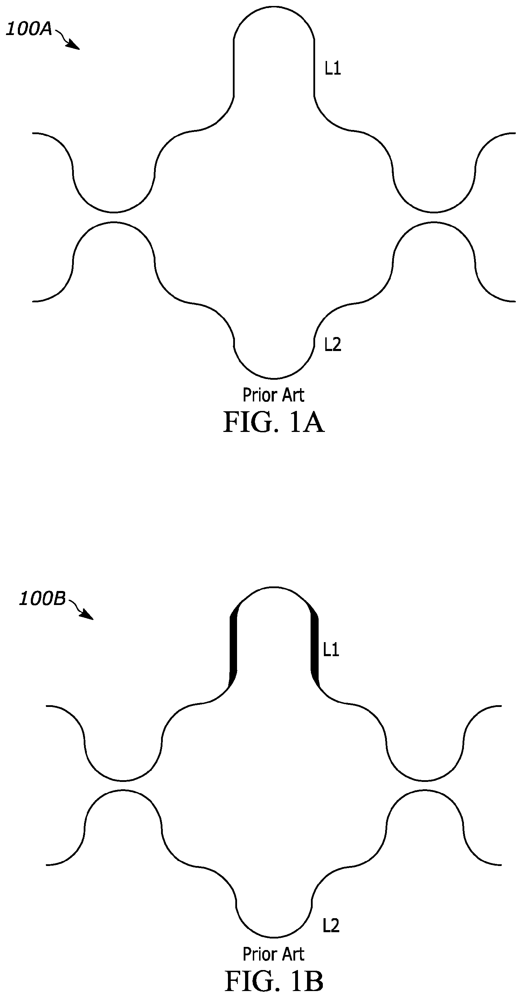

Attention is next directed to FIG. 1A, which depicts a schematic of a simple single MZI 100A, according to the prior art. In this simplest version an upper arm has a delay line, L1, that is longer than a respective line L2 of a lower arm, to introduce a wavelength-dependent phase difference between the two arms to provide a desired free spectral range (FSR). The difference in delay line length may depend on a group index of the waveguide in the delay lines and a peak wavelength may depend on the effective index of the waveguide. For small waveguide widths there is also a loss due to leakage to the substrate.

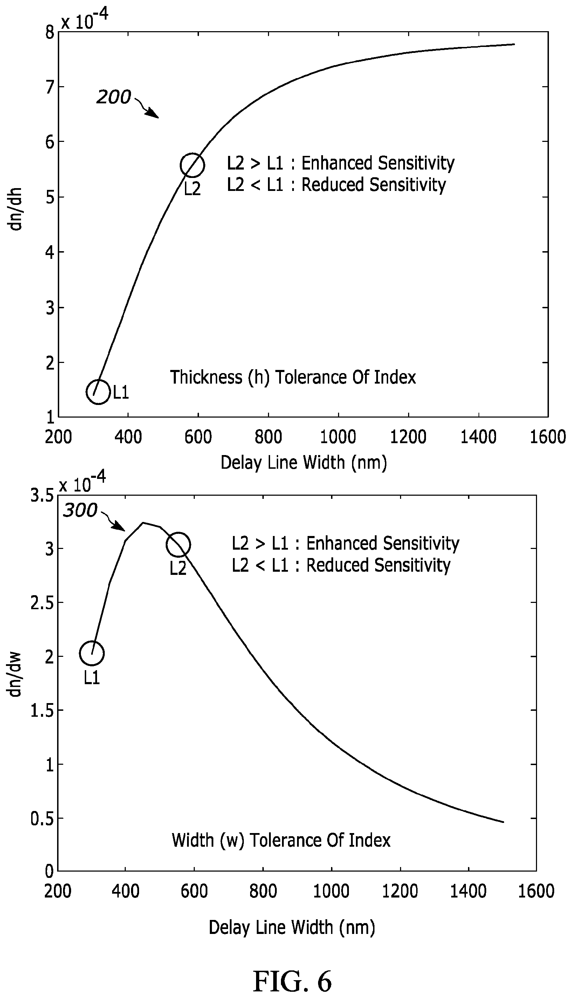

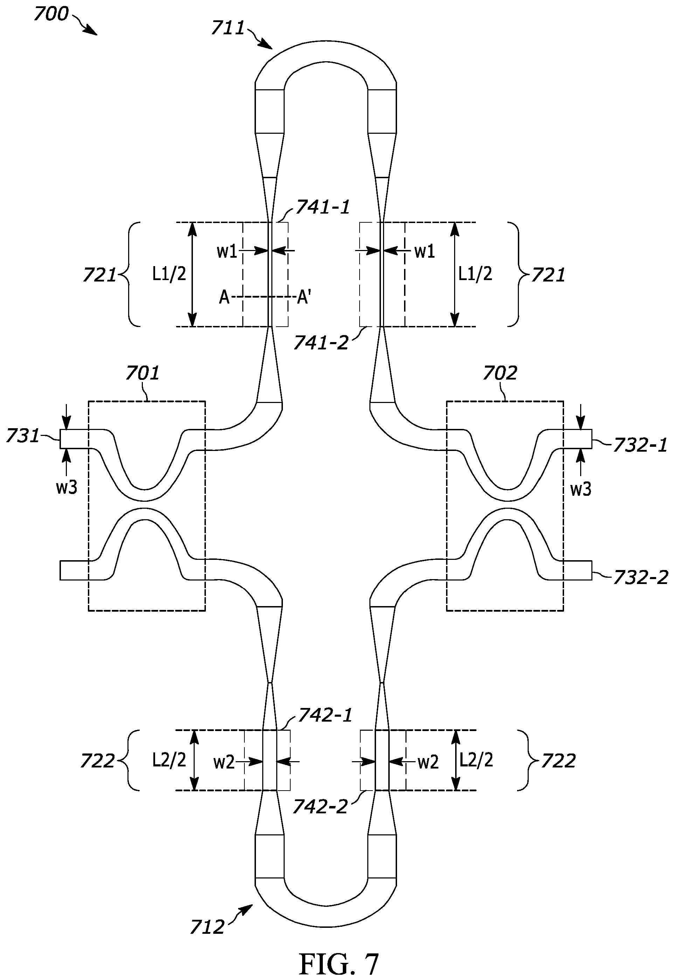

Attention is next directed to FIG. 1B, which depicts another MZI 100B, according to the prior art, that has two delay lines L1, L2, in the upper and lower arms, of different lengths, and includes waveguides with different widths (e.g., as depicted, a width of a delay line L1 in the upper arm is thicker than a width of a delay line L2 in the lower arm). The MZI 100B allows more flexibility in controlling tolerances to parameter variations, as is next described. While the MZI 100B has a general structure found in the prior art, as will be described hereafter with respect to FIG. 6 and FIG. 7, widths and lengths of delay lines may be selected to obviate tolerance problems.

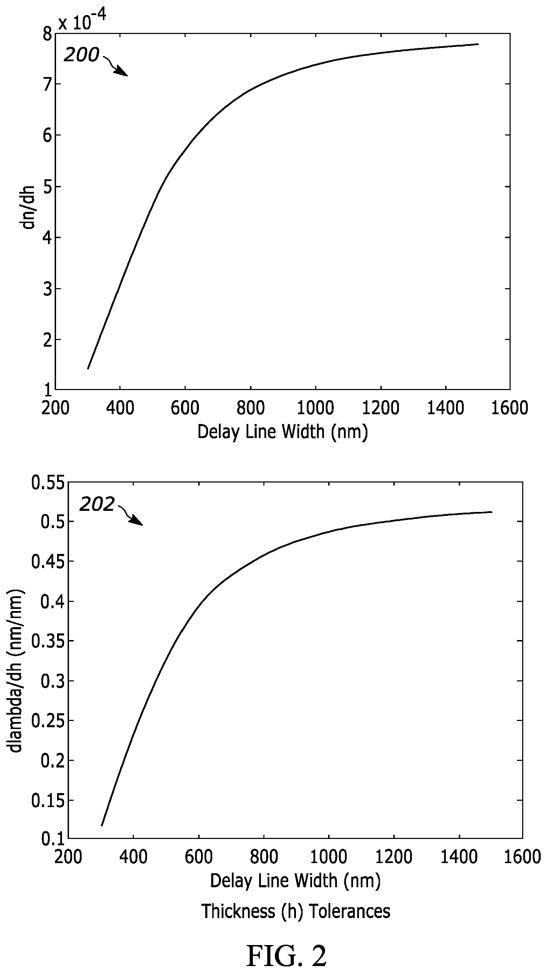

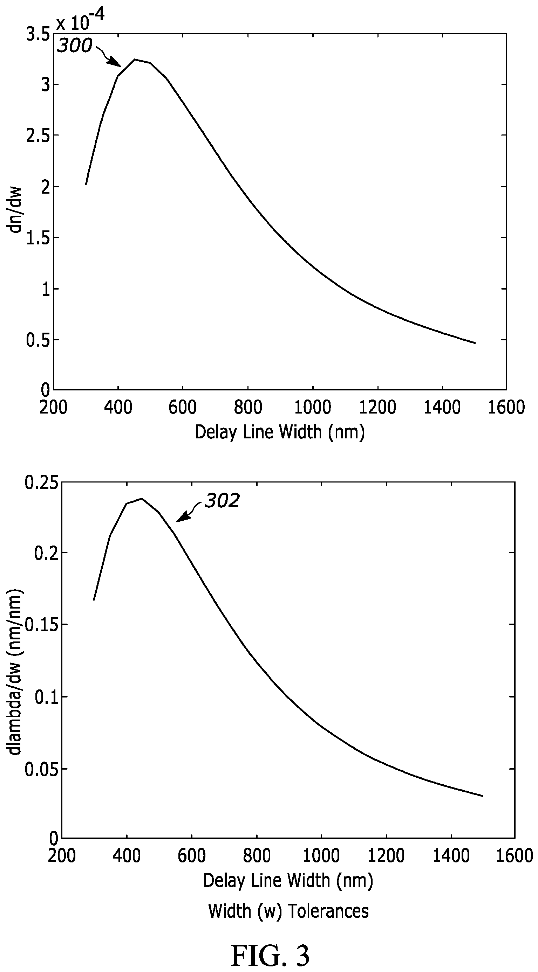

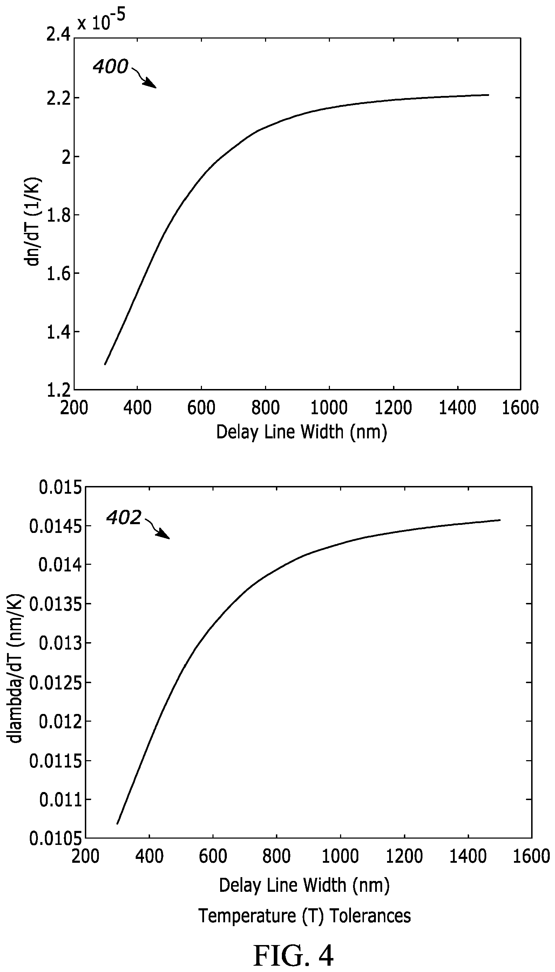

Attention is next directed to FIG. 2, FIG. 3 and FIG. 4, which respectively depict graphs index of refraction and wavelength tolerances of thickness (dn/dh, dlambda/dh), width (dn/dw, dlambda/dw) and temperature (dn/dT, dlambda/dT) of the delay lines, as a function of delay line widths, for example for MZIs formed from silicon nitride waveguides (e.g., using a cladding of SiO2, and on a substrate material of silicon). Furthermore, the graphs of FIG. 2, FIG. 3 and FIG. 4 are for a wavelength of about 1310 nm, however any suitable range of wavelengths is within the scope of the present specification. Put another way, 1310 nm is a wavelength commonly and presently used in optical communication systems, but devices and processes described herein may be adapted for other wavelengths used in optical communication systems.

In each of FIG. 2, FIG. 3 and FIG. 4, an upper graph 200, 300, 400 shows change in effective index of refraction by change in a respective parameter (e.g., thickness=h, width=w, and temperature=T) as a function of delay line width, while a lower graph 202, 302, 402 shows change in a central wavelength by change in a respective parameter as a function of delay line width.

These graphs 200, 300, 400, 202, 302, 402 generally show that the fabrication and temperature tolerances are dependent on the waveguide width of the delay lines, being determined by the dependence of the effective index and the wavelength on the respective parameter. As understood from these 202, 302, 402, generally large widths give the best width variation tolerance. For example, in all the graphs 200, 300, 400, 202, 302, 402, above a width of about 700 nm, changes in the respective tolerances are smaller as the width changes, than for widths less than about 700 nm. Hence, a person of skill in the art might select widths above 700 nm, however this leads to difference in how the width tolerances change relative to the thickness and temperature tolerances.

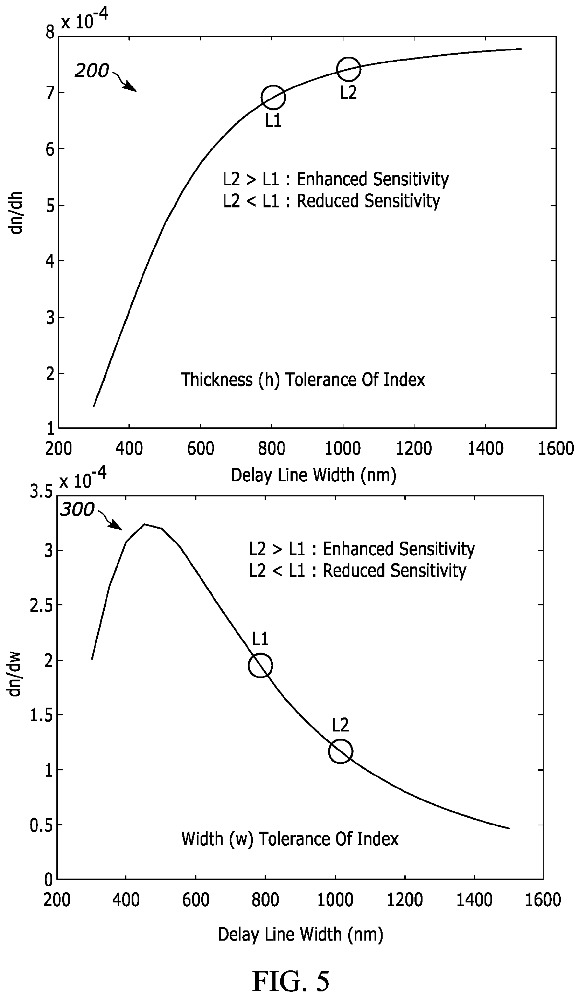

For example, attention is next directed to FIG. 5, which reproduces the graphs 200, 300, (respectively showing dn/dw (change in effective index by change in width) as a function of delay line width, and dn/dh (change in effective index by change in thickness) as a function of delay line width), and further showing example widths values the two delay lines L1, L2 of the MZI 100B, having widths of 800 nm and 1000 nm respectively.

With attention first directed to the graph 300 in FIG. 5, it is understood that dn/dw is around twice as large for the upper delay line L1 compared to the lower delay line L2. Nonetheless, when delay line lengths are selected such that such that L2 = 2*L1 the width sensitivity may be canceled:

$$(dn1/dw)*L1 - (dn2/dw)*L2$$
$$= 2*(1) - (1)*2$$
$$= 0$$

However, comparing the graphs 200, 300 in FIG. 5, as the trend for dn/dh is opposite to that of dn/dw, at least for waveguides of widths larger than 500 nm, opposite requirements for reducing sensitivity occur. For example, as shown at the graph 300, for waveguides of widths larger than 500 nm, dn/dw decreases, whereas, as shown at the graph 200, for waveguides of widths larger than 500 nm, dn/dh increases.

Indeed, comparing the graphs 200, 300 with the graph 400, a similar situation occurs for temperature for waveguides of widths larger than 500 nm: as dn/dw decreases, dn/dT increases. Similarly, comparing the graphs 202, 302 402, for waveguides of widths larger than 500 nm, as dlambda/dw decreases, dlambda/dh and dlambda /dT both increase.

Thus, for waveguides having widths larger than around 500 nm, width sensitivity is anticorrelated with thickness sensitivity and temperature sensitivity (e.g., for both index of refraction and wavelength), and tolerances for width one may only be improved by making respective tolerances for the thickness and temperature worse, and vice-versa. While, in some instances, when a fabrication process has much tighter control over one of these variables than the other, such anticorrelation may be acceptable, generally such anticorrelation represents a technical disadvantage.

However, to simultaneously improve the sensitivity to the width, thickness, and temperature, and according to the provided graphs, at least one of the delay lines L1, L2 may be provided with a width of less than 500 nm, at least according to the graphs 200, 300, 400, 202, 302, 402, and using the materials associated with the graphs of 200, 300, 400, 202, 302, 402, though similar effects may occur with other materials. Indeed, any suitable materials are within the scope of the present specification, that show similar trends of the graphs 200, 300, 400, 202, 302, 402.

As such, it is understood that, for the materials (e.g., silicon nitride) used to generate the graphs 200, 300, 400, 202, 302, 402, 500 nm may comprise a threshold width, above which variations in index-to-width (dn/dw) tolerance are anticorrelated with variations in index-to-thickness (dn/dh) tolerance and with variations in index-to-temperature (dn/dT) tolerance, and below which variations in index-to-width tolerance are correlated with variations in index-to-thickness tolerance and with variations in index-to-temperature tolerance. Similarly, above such a threshold width, variations in wavelength-to-width tolerance (dlambda/dw) are anticorrelated with variations in wavelength-to-thickness tolerance (dlambda/dh) and with variations in wavelength-to-temperature (dlambda/dT) tolerance, and below the threshold width the variations in wavelength-to-width tolerance are correlated with variations in wavelength-to-thickness tolerance and with variations in wavelength-to-temperature tolerance. While the threshold width is 500 nm in the present examples, the threshold width may be any suitable width depending on materials used to form an MZI as provided herein. For example, waveguides of delay lines of MZIs provided herein may be formed from silicon, silicon nitride, or any other suitable material, and the threshold width may be different for each material, and/or the threshold width may vary depending on a substrate and/or other materials and/or thin films onto which an MZI is formed.

For example, attention is next directed to FIG. 6 which again depicts the graphs 200, 300 of FIG. 6, but showing values for the two delay lines L1 and L2 having widths of 300 nm and 600 nm respectively. As is clearly seen, however, the trends in dn/dh and dn/dw are the same in this region (e.g., below 500 nm); hence, in these examples, same requirements for reducing sensitivity occur and/or trends in dn/dh and dn/dw are correlated. Comparing the graphs 200, 300, 400, for delay lines L1 and L2 having widths of 300 nm and 600 nm respectively, it is understood that, again, similar trends occur and changes in tolerance for dn/dh, dn/dw and dn/dT are correlated for widths less than 500 nm. Similarly, comparing the graphs 202, 302, 402, for delay lines ΔL1 and ΔL2 having widths of 300 nm and 600 nm respectively, it is understood that, again, similar trends occur and changes in tolerance for dlambda/dw, dlambda/dh and dlambda /dT are correlated for widths less than 500 nm.

Attention is next directed to FIG. 7, which depicts an MZI 700 with the reduced tolerance sensitivity described with respect to FIG. 6. While the MZI 700 is depicted in discrete segments, it is understood that the segments are optically coupled to each other.

For example, the MZI 700 comprises two power couplers 701, 702 (e.g., depicted as 2x2 directional couplers) connecting two arms 711, 712 of the MZI 700, for example, an upper arm 711 and a lower arm 712, which may be interchangeably referred to, respectively, as a first arm 711 and a second arm 712. The power couplers 701, 702 may be interchangeably referred to, respectively, as an input coupler 701 and an output coupler 702.

The two arms 711, 712 have respective delay lines 721, 722 (e.g., a first delay line 721 and a second delay line 722), provided in two sections in each arm 711, 712, each section having a respective length of L1/2, L2/2. For example, for the first arm 711, the delay line 721 is provided in two sections each of length L1/2, for a total delay line length of L1. Similarly, for the second arm 712, the delay line 722 is provided in two sections each of length L2/2, for a total delay line length of L2. As depicted, the length L1 of the delay line 721 is greater than the length L2 of the delay line 722.

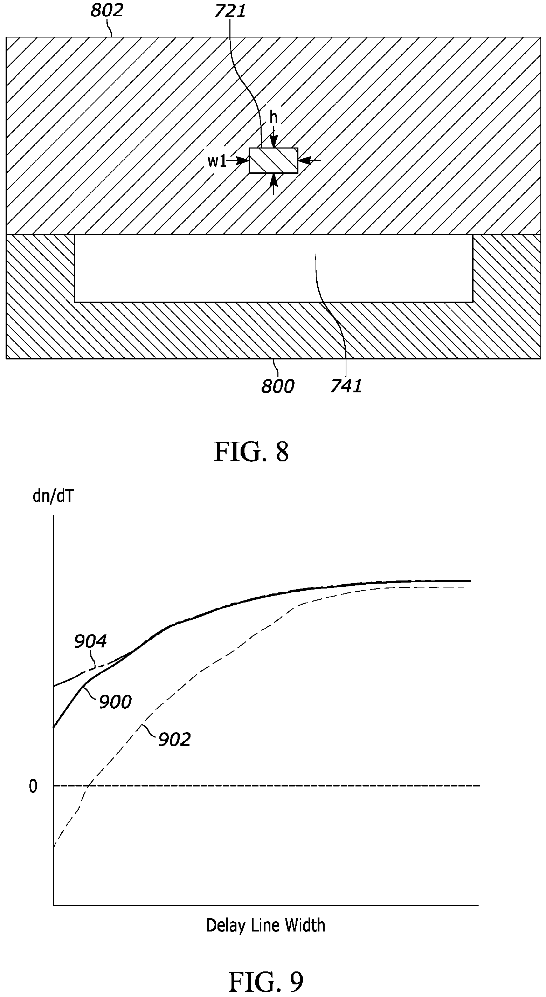

Furthermore, the delay lines 721, 722 are understood to comprise waveguides of different respective widths w1,w2, described in more detail herein. The delay lines 721, 722 may furthermore have about a same height, h (e.g., see FIG. 8).

The other respective components of the arms 711, 712 are otherwise the same and/or similar, and of a same and/or similar length, such that delays in light entering the MZI 700 and travelling through the arms 711, 712 are introduced by the delay lines 721, 722. Put another way, the optical properties of other respective components of the arms 711, 712 are otherwise the same and/or similar.

While the arms 711, 712 have respective delay lines 721, 722, the arms 711, 712 may have as few as one respective delay line (e.g., each of a respective length L1, L2), or more than two respective two delay lines (e.g., having total respective lengths L1, L2), where the respective total lengths of the delay lines 721, 722are L1, L2, and having respective widths w1,w2.

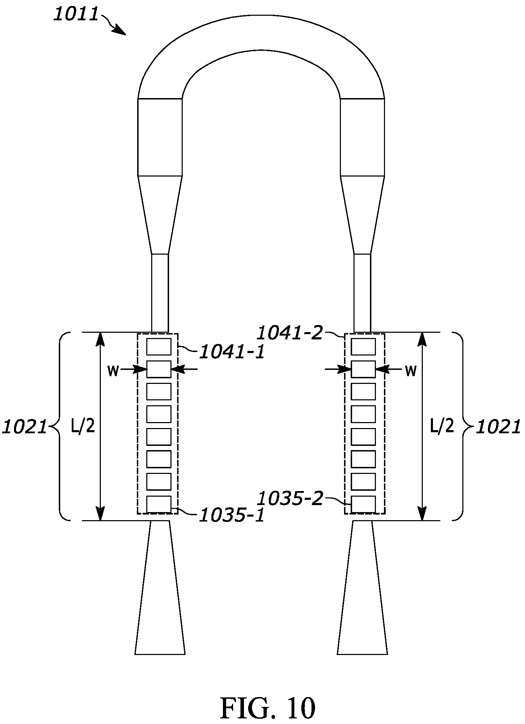

As will be described with respect at least to FIG. 10, while the delay lines 721, 722 of the MZI 700 have different widths w1, w2, the delay lines 721, 722 may alternatively, or in addition, have different geometries or materials to achieve similar properties, as described with respect to FIG. 10.

Furthermore, as depicted, the MZI 700 comprises an input 731 at the input coupler 701, for example to the first arm 711, at which light composed of different wavelengths is received at the MZI 700 in a multiplexer mode. While as depicted the MZI 700 comprises a second input to the second arm 712, in this instance the second input is not used.

The MZI 700 further comprises two outputs 732-1, 732-2 at the output coupler 702. The outputs 732-1, 732-2 are interchangeably referred to, collectively, as the outputs 732, and, generically, as an output 732; this convention will be used elsewhere in the present specification. In general, there is one output 732 for each of the arms 711, 712, at which light, of different respective wavelengths, is output.

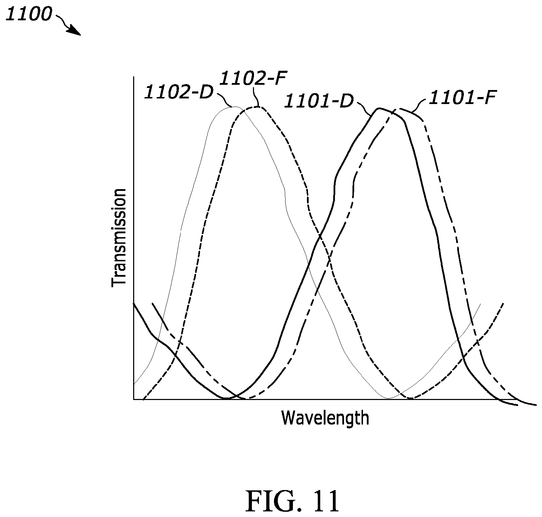

For example according to a standard function of an MZI, the MZI 700 separates the light received at the input 731 into different wavelengths, which are separated and output at respective outputs 732 (e.g., see FIG. 11). It is understood, however, that the MZI 700 may be used in reverse in a demultiplexer mode in which light of different respective wavelengths is received at the two outputs 732-1, 732-2 (e.g., now acting as respective inputs), and the MZI 700 combines the light of different respective wavelengths and outputs the combined light at the input 731 (e.g., now acting as an output),.

In general, as depicted, the inputs 731 and the outputs 732 have a same and/or similar width, w3 (e.g., a third width), which is selected to be large enough to be low loss, and/or at least larger than the widths w1, w2 (e.g., a first width and a second width) of the delay lines 721, 722. For example, a width, w3, may be "large enough" such that the loss caused by leakage into a substrate does not significantly impact the performance of the MZI 700, and such a width many depend on a wavelength of light for which the MZI 700 is otherwise configured; in examples described herein, such a wavelength may be about 1310 nm, and for such a wavelength, the width, w3, may be about 800 nm, and/or greater than about 800 nm (e.g., with the widths w1, w2 being less than about 800 nm), though any suitable range of the width, w3, is within the scope of the present specification. For example, the width, w3 may be greater than about 800 nm, but less than about 1000 nm in some examples.

Furthermore, as also depicted in FIG. 7, the MZI 700 comprises first undercuts 741-1, 741-2 (e.g., the first undercuts 741, and/or a first undercut 741) etched into, and/or formed in, a substrate of the MZI 700, respectively under the first delay lines 721. Similarly, the MZI 700 comprises second undercuts 742-1, 742-2 (e.g., the second undercuts 742, and/or a second undercut 742) etched into, and/or formed in, a substrate of the MZI 700, respectively under the second delay lines 722.

To better show the undercuts 741, 742, attention is next directed to FIG. 8, which depicts a cross-section through a line A-A' of the MZI 700, and in particular through a delay line 721. The cross-section illustrates that the MZI 700 has been grown on a substrate 800, and is encased in a cladding 802. The undercut 741 is understood to have been formed in the cladding 802 and/or the substrate 800 (e.g., via any suitable etching process), and is under the delay line 721, and/or between the delay line 721 and the substrate 800. It is understood that each of the delay lines 721, 722, and respective undercuts 741, 742, have a similar structure as that depicted in FIG. 8. FIG. 8 also shows the thickness, h, of the waveguide of the delay line 721.

Furthermore, a width of the undercuts 741, 742 may be determined by the size of an optical mode of light in the delay lines 721, 722. For example, as a width of the delay lines 721, 722 decreases, weaker confinement of light therein results and hence a larger mode results. The undercuts 741, 742 are generally selected to be wider than a mode size of light that the delay lines 721, 722 and/or the MZI 700 are configured to guide, so that the light does not "leak around" the undercuts 741, 742 to the substrate 80 on either the left or right side of FIG. 8. In a particular example, for a wavelength of about 1310 nm, and a width of a delay line 721, 722 of about 300 nm, a width of an undercut 741, 742 may be about 10 $\mu$m,

though any suitable width is within the scope of the present specification. A depth of an undercut 741, 742 may be generally selected to be greater than a wavelength of light that the delay lines 721, 722 and/or the MZI 700 are configured to guide (e.g., as input to the MZI 700), so that the light does not pass through a material filling an undercut 741, 742 to the substrate 800, and which may also depend on an index of refraction of the material filling an undercut 741, 742. In the particular example, for a wavelength of about 1310 nm, and air filling an undercut 741, 742, an undercut 741, 742 may be about 2 $\mu$m in depth.

The effect of the undercuts 741, 742 are described below in more detail with respect to FIG. 9.

Returning to FIG. 7, to achieve the tolerance sensitivity described with reference to FIG. 6, the relationship between w1, w2 and w3 may comprise:

$$w1 < w2 < w3,$$

and furthermore:

$$L2 < L1.$$

The impact of these relationships may be understood with reference to the graphs of FIG. 6.

For example, from the graphs of FIG. 6, it is understood that the widths w1, w2 of the delay lines 721, 722 are selected such that the lengths L1, L2 of delay lines 721, 722 have respective widths w1, w2 at the graphs of FIG. 6, where trends in tolerances are correlated and/or in a same direction.

Furthermore, the width w3 may be larger than the widths w1, w2, and heuristically selected to be "large enough" to be low loss even when a substrate is not undercut, and larger, and/or much larger, than the at least 500 nm waveguide width used herein, as a reference threshold width, to achieve simultaneous intolerance in the MZI 700. In some examples, when materials of the MZI 700 have properties described with respect to the graphs of FIG. 2, FIG. 3, FIG. 4, and FIG. 6, the width w3 may be larger than 800 nm, whereas in other examples w3 may be larger than 1000 nm.

Turning now to the effect of the undercuts 741, 742, for small width waveguide delay lines 721, 722, a mode of light may not be well confined so variations in the cladding index of refraction (either of an oxide that forms the cladding 802, or any thin intermediate layers) may lead to wavelength variation. Furthermore, leakage to the substrate 800 may add additional loss, and width and thickness variations as well as buried oxide (BOX) thickness variations may lead to loss variation, which may manifest as crosstalk variation. Indeed, it is understood that the MZI 700 depicted in FIG. 7 and FIG. 8 is a simplification, and the MZI 700 may comprise, and/or be formed on, any suitable combination of materials, substrates, BOX layers, and/or other layers.

Regardless, using much narrower width waveguide delay lines (e.g., below 500 nm using the examples described herein) than are typical, allows for correlated sensitivities, but may come at the cost of increased propagation loss as the narrower width waveguide delay lines 721, 722 may fail to sufficiently confine light in a waveguide of the delay lines 721, 722. The undercuts 741, 742 generally address this problem.

For example, the undercuts 741, 742 may be filled with one or more materials to assist with confining the modes to waveguides (e.g., the delay lines 721, 722). Such a suitable material may comprise air, a negative thermal-optic material (e.g., which may include, but is not limited to, $P_2O_5$ in SiO2, MgZnO, and the like), and/or an index-matching material (e.g., index-matched to the cladding material 802, and which may include, but is not limited to, glass-matched index matching fluids, silicone, and the like), and/or any material of a sufficiently low index that obviates leakage and/or a lossy mode and/or is at or less than an index of refraction of the cladding material 802. Put another way, in some examples, any material in an undercut 741, 742 may be of a lower index of refraction than the cladding material 802, but may also depend on materials used for the delay lines 721, 722 and/or the substrate 800. For example, when silicon is used for both the delay lines 721, 722 and/or the substrate 800, having an index of around 3.5, and the cladding 802 is glass having an index of 1.4, an index of the material filling the undercuts 741, 742 may be less than 3.5 but greater than 1.4, though the larger the index of the material filling the undercuts 741, 742, the greater the width and depth of the undercuts 741, 742. In another example, when silicon nitride, having an index of 2.0, is used for both the delay lines 721, 722, and silicon, having an index of 3.5, is used for the substrate 800, and the cladding 802 is glass having an index of 1.4, an index of the material filling the undercuts 741, 742 may again be less than 2.0 but greater than 1.4, though the larger the index of the material filling the undercuts 741, 742, the greater the width and depth of the undercuts 741, 742. In general, however, using an index of the material filling the undercuts 741, 742 is less than or about equal to an index of the cladding 802 may better obviate leakage into the substrate 800.

Furthermore, it is understood that the undercuts 741, 742 effectively increase a distance between the delay lines 721, 722 and the substrate 800. For example a depth between a waveguide and the substrate 800 of about 2 $\mu$m (e.g., the undercuts 741, 742 have a 2 $\mu$m depth) may be enough for low loss for an about 800 nm wide waveguide. However, when a depth of an undercut 741, 742 is increased to about 4 $\mu$m and filled with an index-matched material matched to the cladding 802, even narrower waveguides may be used with low loss. Hence, a depth of the undercuts 741, 742 may depend on a width of the respective delay lines 721, 722, with a depth of the undercuts 741, 742 increasing as a width of the delay lines 721, 722 decreases.

For example, with attention again directed to FIG. 8, assuming the MZI 700 is implemented in a photonic integrated circuit (PIC), the PIC may consist of the cladding material 802 (e.g., SiO2) on the substrate 800 (e.g., silicon, or Silicon Nitride). Within the cladding structure, some suitable distance above the substrate 800, lies the waveguide of a delay line 721 (and a delay line 722) In particular examples, such a suitable distance may be in a range of about 2 $\mu$m to about 3 $\mu$m, which is "large enough" to eliminate and/or minimize loss from an 800 nm wide waveguide (e.g., the input 731 and the outputs 732) to the substrate 800, at about a wavelength of 1310 nm. A portion of the substrate 800 is removed (e.g., using any suitable etching process) to form the undercuts 741, 742 to facilitate low-loss propagation for the waveguides of the delay line 721, 722. The undercuts 741, 742 may be filled with air, or the undercuts 741, 742 may be backfilled with a different material selected to assist with low-loss propagation or to provide tolerance to fabrication variation.

For example, attention is next directed to FIG. 9 which depicts graphs 900, 902 showing an example the effect of an undercut 741, 742 on a shape of index of refraction and wavelength tolerances of thickness (dn/dT) of the delay lines 721, 722, as a function of delay line widths. For comparison, FIG. 9 further depicts a graph 904 showing dn/dT of similar delay lines with no undercut.

In particular, the graphs 900, 902 show changes in shape of the dn/dT curves using, respectively, air and a material with a negative thermo-optic coefficient to fill an undercut 741, 742. Comparing the graphs 900, 902 with the graph 904 and/or the graph 400, it is apparent that at least air in an undercut 741, 742 results in the "low width region" (e.g., less than 500 nm as in the graph 400) to be less steep than when no undercut 741, 742 is present, meaning that the tolerance dn/dT is less sensitive to changes in width when an undercut 741, 742 is present. When material with a negative thermo-optic coefficient is present in an undercut 741, 742, a similar effect occurs.

With respect to the material with a negative thermo-optic coefficient, when the width of a delay line 721, 722 is larger a mode of light may be well contained in the waveguide material with dn/dT >0 and as the width of a delay line 721, 722 is reduced a field of the mode expands to interact with the material with a negative thermo-optic coefficient and dn/dT reduces to become smaller, zero, or even negative. Indeed, the dn/dT curve having a zero-crossing may be beneficial as dn/dT being zero may provide a perfect intolerance to temperature.

In general materials that may be used to fill an undercut 741, 742 may include, but are not limited to, one or more of:

- air, with an index of refraction lower than a cladding material;

- glass, index matched to the cladding material;
- a material having an index of refraction between an index of the cladding material and a respective index of refraction of a waveguide of the delay lines 721, 722; and
- a magneto-optic material, which would allow changing of the index with an external magnetic field or to create non-reciprocal devices.

However such a list is not meant to be exhaustive, and any suitable materials are within the scope of the present specification. Such a suitable material may comprise an index-matching material, and/or any material of a sufficiently low index that obviates leakage and/or a lossy mode in the waveguide material.

Furthermore, the waveguides in the delay lines 721, 722 may be provided in at least two ways: as a narrow waveguide as depicted in FIG. 7 and FIG. 8; or, as depicted in FIG. 10, waveguides of a delay section may be periodically segmented (e.g., as a subwavelength grating) to create smaller effective waveguides for additional flexibility in controlling parameters of the waveguides.

In particular, FIG. 10 depicts an example arm 1011 that may be used in place of one or both of the arms 711, 712 and comprising delay lines 1021. The delay lines 1021 have a total length L formed from two segments of length L/2. However, in this example, the delay lines 1021 comprise respective waveguides that are periodically segmented to form respective subwavelength gratings 1035-1, 1035-2 (e.g., subwavelength gratings 1035 and/or a subwavelength grating 1035). Put another way, a distance between the segments of the subwavelength gratings 1035 is generally less than a wavelength of light input to the arm 1011.

In the example of FIG. 10, a width w of the segmented sections of a subwavelength grating 1035 may be controlled and/or the periodicity and/or segmentation may be heuristically selected to provide the same effect as when w1<w2<w3 in the example of FIG. 7.

A subwavelength grating 1035 generally enables freedom to control the shape of the dn/dw, dn/dh and dn/dT curves, for example by selecting a size and/or spacing of the waveguide sections of the subwavelength grating 1035. The subwavelength grating 1035 may further enable freedom to modify an overlap of the field with a material of respective undercuts 1041-1, 1041-2 (e.g., undercuts 1041, and/or an undercut 1041) under respective segmented sections of the subwavelength gratings 1035, which may provide further control over behavior of an MZI that includes the arm 1011.

It is furthermore understood that when the MZI 700 is modified, such that both arms 711, 712 include subwavelength gratings 1035, the subwavelength gratings 1035 are of different periodicity and/or different lengths, or would be of different widths as described herein.

Furthermore, some examples of the arm 1011 may omit the undercuts 1041.

The MZIs as provided herein may function as follows:

Light is input to one or more power couplers inputs that splits the light into portions into each of two arms.

The portions of the light travel through each arm, acquiring a different phase shift depending on the geometry and lengths L1, L2 of the delay lines. The phase shift is wavelength dependent in a way that is also dependent on the delay section widths and lengths.

The light is recombined by an output power coupler and an amplitude and phase of the light coupled into each of the output waveguides is dependent on the phases acquired in the delay lines.

A particular feature of the present specification is the use of very narrow waveguides, potentially incorporating a periodically segmented waveguide, and undercut, with air or backfilled index tailored material, in the delay lines in order to allow simultaneously: low sensitivity to width and thickness variations; low sensitivity to temperature changes; and low insertion loss.

The waveguide, or effective waveguide, widths are chosen such that, assuming L2<L1, a sensitivity of an effective index of refraction to width (dn/dw), thickness (dn/dh) and temperature (dn/dT) are all greater for a waveguide of a delay lines of wider width w2 than for a waveguide of delay line of shorter width w1 (e.g., L2<L1, and w1<w2). This ensures that an MZI as provided herein may have low sensitivity to all the parameters simultaneously.

In order to satisfy the above condition the waveguides of the delay lines are fabricated to be very narrow as compared to prior art waveguides. Furthermore, to achieve low loss performance, an undercut, as depicted in FIG. 8, may be provided to inhibit radiative loss to a substrate. Filling the undercut with different materials may enable refinement of the above sensitivities (dn/dw, dn/dh, dn/dT) to optimize the filter performance.

Put another way, the use of two very narrow delay lines, which are also undercut, and which may optionally be periodically segmented, may enable MZI filters with simultaneous low loss and low sensitivity to fabrication and temperature variations. The material in the undercut may be selected to optimize the loss and tolerance to parameter variations.

Some alternatives are now briefly described.

Low sensitivity to waveguide widths may be achieved by using very large waveguides. This however results in much larger filter structures.

Low sensitivity to temperature may be achieved by using exotic materials with negative thermo-optic coefficients. However, these materials may not be compatible or available in large PIC foundries.

A thermal strain induced index control mechanism may be used in the undercut, effectively achieving a negative thermo-optic coefficient.

The need for low sensitivity to these parameters may not be necessary if a filter is actively tuned. However, this requires high power consumption (thermal tuning) or large sizes and insertion losses (electro-optic tuning).

Incorporating the components described herein into an MZI may allow simultaneous improvement of sensitivity to various parameters whereas in prior art MZIs the sensitivities to various parameters would have to be optimized in trade-offs against each and against the insertion loss.

Attention is next directed to FIG. 11, which depicts a graph 1100 of measured transmission of two different colors of light, as a function of wavelength, at an Output 1 and an Output 2 (e.g., outputs 732-1, 732-2), for a prototype of the MZI 700. For example, the graph 1100 includes curves 1101-D, 1102-D representing a predicted output, respectively, at the outputs 732-1, 732-2 for two different colors (e.g., wavelength ranges) of light input to the input 731 designed according the criteria described herein. Furthermore, the graph 1100 includes curves 1101-F, 110F-D representing measured output, respectively, at the outputs 732-1, 732-2 for the two different colors (e.g., wavelength ranges) of light input to the input 731, for the fabricated prototype of the MZI 700 based on the design. Comparing the curves 1101-D, 1101-F, and the curves 1102-D, 1102-F, it is apparent that the graph 1100 shows that the tolerances introduced by the criteria described herein have resulted in a fabricated MZI 700 having properties close to that of the design of the MZI 700.

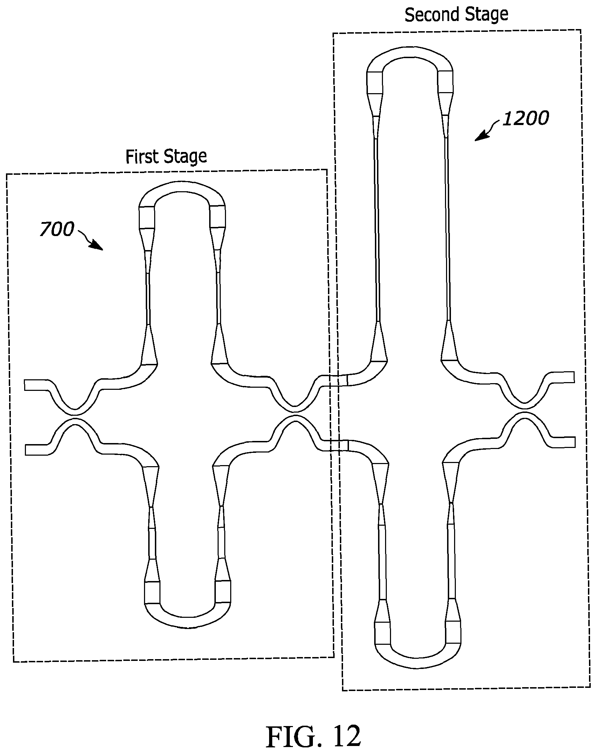

FIG. 12 depicts an example of how the MZI 700 may be coupled to a second MZI 1200 (e.g., forming two stages), with the second MZI 1200 being similar to the MZI 700, but with longer respective delay lines. The combination of the MZIs 700, 1200 are understood to form a multiplexer or demultiplexer. For example in FIG. 12, respective outputs of a the MZI 700 are coupled with respective inputs of the second MZI 1200, in a first stage and a second stage. Indeed, the combination of the MZIs 700, 1200 may form a cascading filter provided in two stages.

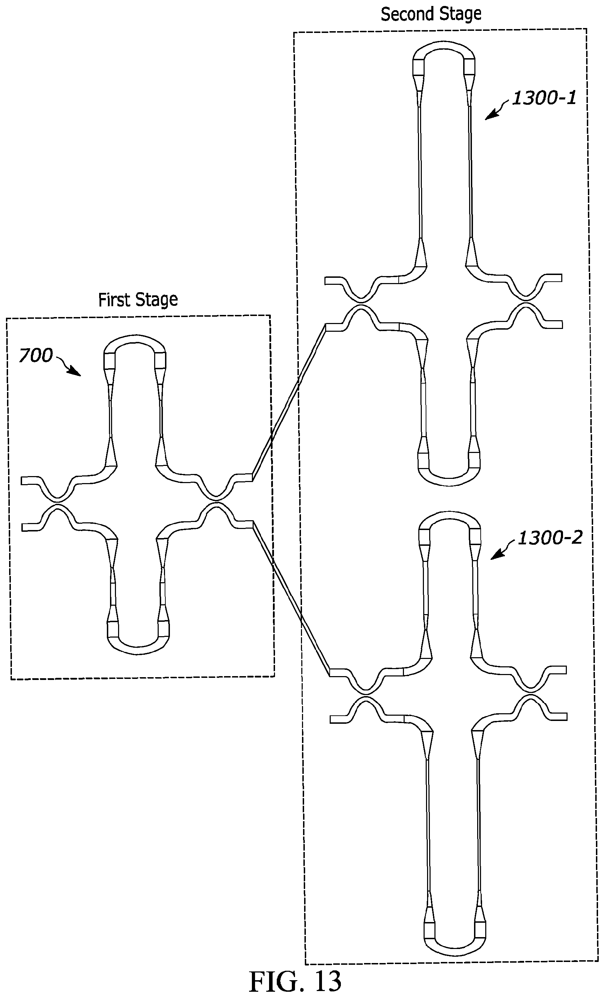

Similarly, FIG. 13 depicts another example of how the MZI 700 may be coupled to a two MZIs 1300-1, 1300-2 (e.g., the MZIs 1300 and/or an MZI 1300), again forming a cascading filter provided in two stages. The two MZIs 1300 are similar to the MZI 700, but with longer respective delay lines.

For example, in FIG. 13, a first respective output of the MZI 700, in a first stage, is coupled to a respective input of the MZI 1300-1 in a second stage, and a second respective output of the MZI 700, in the first stage is coupled, to a respective input of a the MZI 1300-2 in the second stage. The MZIs 1300 of the second stage have longer respective delay lines than the MZI 700 of the first stage.

While the MZIs provided herein are described with respect to particular materials, the MZIs provided herein may be formed from any suitable combination of materials, which may change the shape of the selected widths and/or lengths.

Similarly, it is understood that while the MZIs provided herein are described with respect to optical properties, such optical properties are wavelength dependent, and hence different wavelengths used as input to the MZIs may change the shape of the selected widths and/or lengths.

Indeed, it is understood that a method provided herein may comprise: selecting widths and lengths of delay sections of an MZI using graphs similar to the graphs 200, 300, 400, 202, 302, 402, and having the configuration shown in FIG. 7, using optical properties of materials used to fabricate the MZI, the widths and the lengths of the delay sections selected where trends in tolerances of dn/dh and dn/dw are in a same direction. Such selections may also be wavelength dependent.

The many features and advantages of the embodiments will be apparent from the description and, thus, it is intended by the appended claims to cover all such features and. Further, since numerous modifications and changes will readily occur to those skilled in the art, it is not desired to limit the embodiments to the exact construction and operation illustrated and described, and accordingly all suitable modifications and equivalents may be resorted to, falling within the scope of the claims.

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that there are yet more alternative examples and modifications possible, and that the above examples are only illustrations of one or more examples. The scope, therefore, is only to be limited by the claims appended hereto.

In general, the disclosure therefore concerns the aspects defined by the following two sets of clauses.

First set of clauses:

1. A Mach-Zender Interferometer (MZI) comprising:

a first arm comprising: one or more first delay sections; and respective first undercuts under the one or more first delay sections, the one or more first delay sections having a total first length and a first width;
a second arm comprising: one or more second delay sections; and respective second undercuts under the one or more second delay sections, the one or more second delay sections having a total second length and a second width, wherein the total first length is longer than the total second length, and the first width is less than the second width,
wherein the first width and the second width are selected to be less than a threshold width, and wherein for widths above the threshold width, variations in index-to-width tolerance are anticorrelated with respective variations in index-to-thickness tolerance and index-to-temperature tolerance, and for respective widths below the threshold width the variations in the index-to-width tolerance are correlated with the respective variations in the index-to-thickness tolerance and the index-to-temperature tolerance.

2. The MZI of clause 1, further comprising at least one input and at least two outputs having a third width that is greater than the second width.

3. The MZI of any one of clause 1 to clause 2, wherein the first arm and the second arm comprise silicon.

4. The MZI of any one of clause 1 to clause 2, wherein the first arm and the second arm comprise silicon nitride.

5. The MZI of any one of clause 1 to clause 4, wherein:

the one or more first delay sections comprises one or more first periodically segmented waveguides of a first periodicity; and

the one or more second delay sections comprises one or more second periodically segmented waveguides of a second periodicity, different from the first periodicity.

6. The MZI of any one of clause 1 to clause 5, further comprising:

a cladding; and

a material in the respective first undercuts and the respective second undercuts, the material comprising one or more of: air; a negative thermo-optic material; and an index-matching material that is index matched to the cladding.

7. The MZI of any one of clause 1 to clause 6, further comprising:

a cladding; and

a material in the respective first undercuts and the respective second undercuts, the material having an index of refraction that is less than or about equal to an index of refraction of the cladding.

8. The MZI of any one of clause 1 to clause 7, wherein the respective first undercuts and the respective second undercuts are formed to have a depth greater than a wavelength of light that the one or more first delay sections and the one or more second delay sections are configured to guide.

9. The MZI of any one of clause 1 to clause 8, wherein the respective first undercuts and the respective second undercuts are formed to be wider than a mode size of light that the one or more first delay sections and the one or more second delay sections are configured to guide.

10. The MZI of any one of clause 1 to clause 9, wherein the first width and the second width are selected such that the respective variations in the index-to-width tolerance, the index-to-thickness tolerance and the index-to-temperature tolerance are all in a same direction.

11. The MZI of any one of clause 1 to clause 10, further comprising a cladding that comprises one or more of glass and $SiO_2$.

12. The MZI of any one of clause 1 to clause 11, wherein the first arm and the second arm comprise optically coupled power couplers arranged as 2x2 directional couplers.

**Second set of clauses:**

1. A Mach-Zender Interferometer (MZI) comprising:

a first arm comprising: one or more first delay sections comprising one or more first periodically segmented waveguides of a first periodicity; and

a second arm comprising: one or more second delay sections comprising one or more second periodically segmented waveguides of a second periodicity, different from the first periodicity.

2. The MZI of clause 1, wherein:

the first arm further comprises respective first undercuts under the one or more first delay sections; and

the second arm further comprises respective second undercuts under the one or more second delay sections.

3. The MZI of any one of clause 1 to clause 2, wherein:

the one or more first delay sections having a total first length and a first width;

the one or more second delay sections having a total second length and a second width,

wherein the total first length is longer than the total second length, and the first width is less than the second width,

wherein the first width and the second width are selected to be less than a threshold width, and wherein for widths above the threshold width, variations in index-to-width tolerance are anticorrelated with respective variations in index-to-thickness tolerance and index-to-temperature tolerance, and for respective widths below the threshold width the variations in the index-to-width tolerance are correlated with the respective variations in index-to-thickness tolerance and the index-to-temperature tolerance.

4. The MZI of clause 3, further comprising at least one input and at least two outputs having a third width that is greater than the second width.

5. The MZI of any one of clause 1 to clause 4, wherein the first arm and the second arm comprise silicon.

6. The MZI of any one of clause 1 to clause 5, wherein the first arm and the second arm comprise silicon nitride.

7. The MZI of any one of clause 1 to clause 6, further comprising a cladding that comprises one or more of glass and $SiO_2$.

8. The MZI of any one of clause 1 to clause 7, wherein the first arm and the second arm comprise optically coupled power couplers arranged as 2x2 directional couplers.

**Claims**

1. A Mach-Zender Interferometer (MZI) (700) comprising:

    a first arm (711) comprising: one or more first delay sections (721); and respective first undercuts (741-1) under the one or more first delay sections (721), the one or more first delay sections (721) having a total first length (L1) and a first width (w1);
    a second arm (712) comprising: one or more second delay sections (722); and respective second undercuts (741-2) under the one or more second delay sections (722), the one or more second delay sections (722) having a total second length (L2) and a second width (w2),
    wherein the total first length (L1) is longer than the total second length (L2), and the first width (w1) is less than the second width (w2),
    wherein the first width (w1) and the second width (w2) are selected to be less than a threshold width, and
    wherein for widths above the threshold width, variations in index-to-width tolerance are anticorrelated with respective variations in index-to-thickness tolerance and index-to-temperature tolerance, and for respective widths below the threshold width the variations in the index-to-width tolerance are correlated with the respective variations in the index-to-thickness tolerance and the index-to-temperature tolerance.

2. The MZI (700) of claim 1, further comprising at least one input (731) and at least two outputs (732) having a third width (w3) that is greater than the second width (w2).

3. The MZI (700) of any one of claim 1 to claim 2, wherein the first arm (711) and the second arm (712) comprise silicon.

4. The MZI (700) of any one of claim 1 to claim 2, wherein the first arm (711) and the second arm (712) comprise silicon nitride.

5. The MZI (700) of any one of claim 1 to claim 4, wherein:

    the one or more first delay sections (721) comprises one or more first periodically segmented waveguides (1021) of a first periodicity; and
    the one or more second delay sections (722) comprises one or more second periodically segmented waveguides of a second periodicity, different from the first periodicity.

6. The MZI (700) of any one of claim 1 to claim 5, further comprising:

    a cladding (802); and
    a material in the respective first undercuts (741-1) and the respective second undercuts (741-2), the material comprising one or more of: air; a negative thermo-optic material; and an index-matching material that is index matched to the cladding (802).

7. The MZI (700) of any one of claim 1 to claim 6, further comprising:

    a cladding (802); and
    a material in the respective first undercuts (741-1) and the respective second undercuts (741-2), the material having an index of refraction that is less than or about equal to an index of refraction of the cladding (802).

8. The MZI (700) of any one of claim 1 to claim 7, wherein the respective first undercuts (741-1) and the respective second undercuts (741-2) are formed to have a depth greater than a wavelength of light that the one or more first delay sections (721) and the one or more second delay sections (722) are configured to guide.

9. The MZI (700) of any one of claim 1 to claim 8, wherein the respective first undercuts (741-1) and the respective second undercuts (741-2) are formed to be wider than a mode size of light that the one or more first delay sections (721) and the one or more second delay sections (722) are configured to guide.

10. The MZI (700) of any one of claim 1 to claim 9, wherein the first width (w1) and the second width (w2) are selected such that the respective variations in the index-to-width tolerance, the index-to-thickness tolerance and the index-to-temperature tolerance are all in a same direction.

11. The MZI (700) of any one of claim 1 to claim 10, further comprising a cladding (802) that comprises one or more of glass and $SiO_2$.

12. The MZI (700) of any one of claim 1 to claim 11, wherein the first arm (711) and the second arm (712) comprise optically coupled power couplers (701,

**EP 4 650 863 A1**

702) arranged as 2x2 directional couplers.

100A

L1

L2

Prior Art

FIG. 1A

100B

L1

L2

Prior Art

FIG. 1B

Thickness (h) Tolerances

FIG. 2

Width (w) Tolerances

FIG. 3

Temperature (T) Tolerances

FIG. 4

FIG. 5

FIG. 6

FIG. 7

FIG. 8

FIG. 9

FIG. 10

FIG. 11

FIG. 12

FIG. 13

Europäisches
Patentamt
European
Patent Office
Office européen
des brevets

## EUROPEAN SEARCH REPORT

**Application Number**

EP 25 17 7092

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2018/167146 A1 (KATO MASAKI [US] ET AL) 14 June 2018 (2018-06-14) | 1-4,6-12 | INV.<br>G02F1/21 |
| A | * figures 1, 3-6 *<br>* paragraphs [0031], [0038] - [0039] * | 5 | G02B6/125<br>G02F1/225 |
| X | YEN TZU-HSIANG ET AL: "Fabrication-Tolerant CWDM (de)Multiplexer Based on Cascaded Mach-Zehnder Interferometers on Silicon-on-Insulator", JOURNAL OF LIGHTWAVE TECHNOLOGY, IEEE, USA, vol. 39, no. 1, 24 September 2020 (2020-09-24), pages 146-153, XP011826203, ISSN: 0733-8724, DOI: 10.1109/JLT.2020.3026314 [retrieved on 2020-12-14] | 1-4,6-12 | ADD.<br>G02B6/293<br>G02B6/12 |
| A | * the whole document * | 5 | |

|  |
|---|
| **TECHNICAL FIELDS SEARCHED (IPC)** |
| G02F<br>G02B |

The present search report has been drawn up for all claims

1

| Place of search | Date of completion of the search | Examiner |
|---|---|---|
| The Hague | 30 September 2025 | Topak, Eray |

EPO FORM 1503 03.82 (P04C01)

## ANNEX TO THE EUROPEAN SEARCH REPORT
## ON EUROPEAN PATENT APPLICATION NO.

EP 25 17 7092

This annex lists the patent family members relating to the patent documents cited in the above-mentioned European search report.
The members are as contained in the European Patent Office EDP file on
The European Patent Office is in no way liable for these particulars which are merely given for the purpose of information.

30-09-2025

| Patent document cited in search report | Publication date | Patent family member(s) | Publication date |
|---|---|---|---|
| US 2018167146 A1 | 14-06-2018 | CN 207037149 U | 23-02-2018 |
| | | US 2017324482 A1 | 09-11-2017 |
| | | US 2018167146 A1 | 14-06-2018 |

EPO FORM P0459

For more details about this annex : see Official Journal of the European Patent Office, No. 12/82